# EUROPÄISCHE PATENTSCHRIFT

(11) **EP 0 918 939 B1**
(45) Veröffentlichungstag und Bekanntmachung des Hinweises auf die Patenterteilung: **13.11.2002**
(21) Anmeldenummer: 97935436.2
(22) Anmeldetag: 17.07.1997
(51) Int. Cl.: F15B 13/043

(54) **ELEKTRO-PNEUMATISCHER STELLUNGSREGLER**
ELECTROPNEUMATIC POSITIONER
POSITIONNEUR ELECTROPNEUMATIQUE

(30) Priorität: 21.08.1996 DE 19635368
(43) Veröffentlichungstag der Anmeldung: 02.06.1999
(73) Patentinhaber: SIEMENS AKTIENGESELLSCHAFT, 80333 München (DE)
(72) Erfinder: NUSCHE, Georg, D-13629 Berlin (DE)
(86) Internationale Anmeldenummer: DE9701511
(87) Internationale Veröffentlichungsnummer: WO98007993

(56) Entgegenhaltungen:
- EP-A- 0 366 605
- DE-C- 19 537 493
- GB-A- 2 134 223
- US-A- 2 861 550
- "Grundlagen der hydraulischen Schaltungstechnik" OLHYDRAULIK UND PNEUMATIK, Bd. 38, Nr. 7, Januar 1994, VEREINIGTE FACHVERLAGE, MAINZ, Seiten 388-391, XP000195286
- "Der Piezo-Pillen-Knick" FLUID, April 1989, Seite 34,37 XP002045368 in der Anmeldung erwähnt

## Beschreibung

Die Erfindung bezieht sich auf einen elektro-pneumatischen Stellungsregler mit einem pneumatisch betätigbaren Zweikammer-Stellantrieb mit einem pneumatischen Zuluft- und einem pneumatischen Ablufthauptventil an einer zu einer Kammer des Stellantriebs führenden Druckleitung und mit einem weiteren pneumatischen Zuluft- und einem weiteren pneumatischen Ablufthauptventil an einer weiteren zu einer weiteren Kammer des Stellantriebs führenden Druckleitung und mit jeweils einer Betätigungseinrichtung für jedes Hauptventil, wobei die Betätigungseinrichtung für das eine Zulufthauptventil aus einem auf ein Umschaltventil des einen Zulufthauptventils einwirkenden Steuerventil besteht und die Betätigungseinrichtung für das weitere Zulufthauptventil aus einem auf ein Umschaltventil des weiteren Zulufthauptventils einwirkenden weiteren Steuerventil besteht.

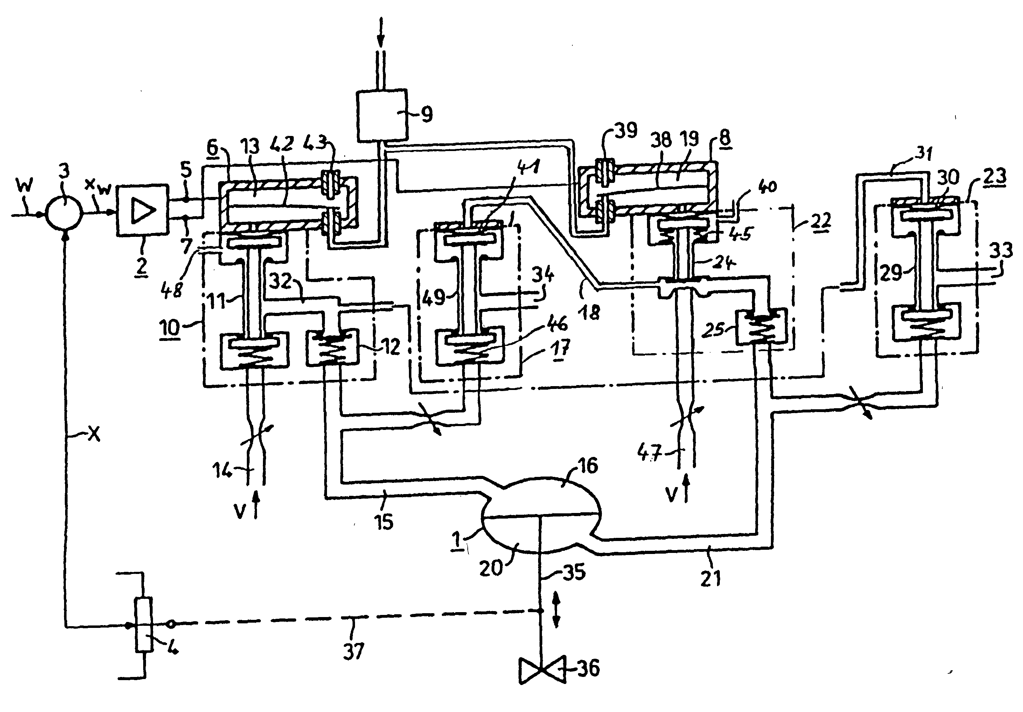

Ein bekannter pneumatischer Stellungsregler dieser Art ist in Form des Siemens-SIPART PS Elektro-pneumatischer Stellungsregler 6DR3000 offenkundig vorbenutzt und in seinem wesentlichen Aufbau in der Siemens-Betriebsanleitung "SIPART PS Elektro-pneumatischer Stellungsregler 6DR3000-1N/E bis 2N/E" mit der Bestell-Nr. C73000-B7400-C136-1 dargestellt. Bei diesem bekannten Stellungsregler befindet sich - wie Bild 2 der genannten Betriebsanleitung zeigt - jedem Hauptventil zugeordnet ein Steuerventil, das als Piezoventil ausgebildet ist; ein solches Piezoventil ist in der Zeitschrift "fluid", April 1989, Seiten 34 und 37 im einzelnen beschrieben. Jeweils zwei mit den Hauptventilen an einer Druckleitung des Zweikammer-Stellantriebs zusammenarbeitende Steuerventile sind über einen Vorsteuerdruckregler an eine Druckluftquelle angeschlossen.

Der Erfindung liegt die Aufgabe zugrunde, den bekannten elektro-pneumatischen Stellungsregler in seinem Aufbau unter Beibehaltung seiner vorteilhaften technischen Eigenschaften zu vereinfachen, um eine Verminderung der Herstellungskosten zu erreichen.

Zur Lösung dieser Aufgabe ist bei einem elektro-pneumatischen Stellungsregler der oben angegebenen Art erfindungsgemäß die Betätigungseinrichtung des einen Ablufthauptventils von einer Zuleitung gebildet, die die Druckbeaufschlagungsseite des einen Ablufthauptventils mit dem Innenraum des Umschaltventils des weiteren Zulufthauptventils verbindet, und die Betätigungseinrichtung des weiteren Ablufthauptventils ist von einer weiteren Zuleitung gebildet, die von der Druckbeaufschlagungsseite dieses Ablufthauptventils in das Umschaltventil des einen Zulufthauptventils führt.

Es ist zwar ein elektro-pneumatischer Stellungsregler gemäß der als Stand der Technik geltenden älteren deutschen Patentschrift 195 37 493 (GR 95 P 4163 DE) mit Betätigungseinrichtungen in Form von Zuleitungen zu zwei Hauptventilen unter Einsparung von zwei Steuerventilen versehen, jedoch sind bei diesem Stellungsregler die Betätigungseinrichtungen des weiteren Zulufthauptventils und des weiteren Ablufthauptventils von Zuleitungen gebildet.

Ein Vorteil des erfindungsgemäßen Stellungsreglers besteht darin, daß bei seinem Aufbau im Vergleich zu dem eingangs beschriebenen, bekannten Stellungsregler auf zwei Steuerventile verzichtet werden kann, indem anstelle der zwei Steuerventile zur Ansteuerung des weiteren Zulufthauptventils und des weiteren Ablufthauptventils jeweils nur Zuleitungen zu der einen Druckleitung bzw. in das eine Umschaltventil des einen Zulufthauptventils geführt werden. Ein weiterer Vorteil besteht darin, daß infolge der Verwendung von nur noch zwei Steuerventilen anstelle der bisherigen vier Steuerventile auf einen Vorsteuerdruckregler verzichtet werden kann. Ein zusätzlicher Vorteil ist dadurch gegeben, daß die Zuverlässigkeit des erfindungsgemäßen Stellungsreglers im Vergleich zu dem bekannten Stellungsregler noch mehr gesteigert ist, weil zwei Steuerventile durch überhaupt nicht anfällige Zuleitungen ersetzt sind.

Zur Erläuterung der Erfindung ist in der Figur ein Ausführungsbeispiel des erfindungsgemäßen elektro-pneumatischen Stellungsreglers wiedergegeben.

Der dargestellte Stellungsregler für einen pneumatischen Zweikammer-Stellantrieb 1 weist eingangsseitig eine Regelelektronik 2 auf, die eingangsseitig mit einer Regelabweichung x_{w} beaufschlagt ist. Diese Regelabweichung x_{w} ist in einem Vergleicher 3 aus einer über ein Potentiometer 4 rückgeführten Regelgröße X und einer Führungsgröße W gebildet, die von außen dem elektro-pneumatischen Stellungsregler zugeführt wird. Ein Ausgang 5 der Regelelektronik 2 ist an ein Steuerventil 6 geführt, das in dem dargestellten Ausführungsbeispiel aus einem Piezowandler besteht. Ein weiterer Ausgang 7 der Regelelektronik 2 ist an ein weiteres Steuerventil 8 angeschlossen, das ebenfalls als Piezowandler ausgebildet ist. Beide Steuerventile 6 und 8 sind über einen Vorsteuerdruckregler 9 an Druckluft angeschlossen.

Das Steuerventil 6 bildet eine Betätigungseinrichtung für ein Zulufthauptventil 10, das ein Umschaltventil 11 und ein Rückschlagventil 12 enthält. Das Ventilorgan des Umschaltventils 11 wird durch eine Erhöhung des Drucks im Innenraum 13 des Steuerventils 6 nach unten bewegt, wodurch über einen Rohrstutzen 14 ein Versorgungsdruck V in das Umschaltventil 11 und damit an das Rückschlagventil 12 gelangen kann. Über das Rückschlagventil 12 ist das Zulufthauptventil 10 an eine Druckleitung 15 angeschlossen, die zu einer in der Figur oberen Kammer 16 des pneumatischen Zweikammer-Stellantriebs 1 führt. An der Druckleitung 15 liegt außerdem ein Ablufthauptventil 17, das ein Schließventil darstellt. Das Ventilorgan dieses Ablufthauptventils 17 wird mittels einer von einer Zuleitung 18 gebildeten Betätigungseinrichtung aus der in der Figur gezeigten Stellung heraus nach unten bewegt, wenn - wie später noch im einzelnen erläutert wird - der Druck im Innenraum 19 des weiteren Steuerventils 8 klein ist.

Eine zweite Kammer 20 des Zweikammer-Stellantriebs 1 ist über eine weitere Druckleitung 21 mit einem weiteren Zulufthauptventil 22 sowie mit einem weiteren Ablufthauptventil 23 verbunden. Das weitere Zulufthauptventil 22 enthält ein Umschaltventil 24 und ein Rückschlagventil 25; die Druckbeaufschlagung des weiteren Zulufthauptventils 22 erfolgt mittels des weiteren Steuerventils 8, das an den Vorsteuerdruckregler 9 angeschlossen ist.

Das weitere Ablufthauptventil 23 besteht nur aus einem pneumatischen Umschaltventil 29, das mit seiner von einer Membran 30 gebildeten Druckbeaufschlagungsseite über eine Zuleitung 31 mit dem Innenraum 32 des einen Zulufthauptventils 10 verbunden ist. Das weitere Ablufthauptventil 23 hat einen Entlüftungskanal 33; eine entsprechende Entlüftungsöffnung 34 weist auch das eine Ablufthauptventil 17 auf.

Der Vollständigkeit halber sei erwähnt, daß der Zweikammer-Stellantrieb 1 über eine mechanische Verbindung 35 auf ein Stellglied 36 einwirkt, das das Stellorgan eines nicht weiter dargestellten Ventils sein kann. Mit der Verstellung des Zweikammer-Stellantriebs 1 wird über eine in der Figur strichliert dargestellte weitere mechanische Verbindung 37 eine elektrische Rückmeldeeinrichtung - hier in Form des Potentiometers 4 - entsprechend der Stellung des Zweikammer-Stellantriebs 1 verstellt.

Weitere Einzelheiten des elektro-pneumatischen Stellungsreglers werden im Rahmen der nachfolgenden Beschreibung seiner Arbeitsweise erläutert:
Wird an den Stellungsregler bei noch nicht angelegtem Versorgungsdruck V eine nicht dargestellte Betriebsspannung angelegt, dann bewegt sich ein Ventilorgan 38 des weiteren Steuerventils 8 aus der in der Figur gezeigten Lage nach oben und verschließt dadurch eine Abluftöffnung 39, woraufhin sich im Innern 19 des weiteren Steuerventils 8 ein Druck aufbaut, der zu einem Schließen des weiteren Zulufthauptventils 22 führt; das eine Ablufthauptventil 17 bleibt unbetätigt in der gezeigten Lage, weil über die eine Zuleitung 18 als Betätigungseinrichtung für das eine Ablufthauptventil 17 und das Umschaltventil 24 eine Entlüftung über eine Entlüftungsöffnung 40 erfolgt. Ist der Versorgungsdruck V zugeschaltet und wird durch ein elektrisches Signal am Ausgang 5 der Regelelektronik 2 das Steuerventil 6 betätigt, dann legt sich dessen Ventilorgan 42 für die Zeit des Impulses gegen eine Abluftöffnung 43, so daß sich im Innenraum 13 des Steuerventils 6 der Vorsteuerdruck aufbaut, woraufhin das Ventilorgan des Umschaltventils 11 des einen Zulufthauptventils 10 nach unten bewegt wird; dadurch wird das Umschaltventil 11 zum Rohrstutzen 14 geöffnet. Es wird daraufhin das Rückschlagventil 12 mit dem Versorgungsdruck V beaufschlagt und geöffnet. Damit gelangt ein Druckluftimpuls in die obere Kammer 16 des Zweikammer-Stellantriebs 1. Gleichzeitig wird über eine weitere Zuleitung 31 der Versorgungsdruck V im Innenraum 32 des einen Zulufthauptventils 10 auf die Druckbeaufschlagungsseite (Membran 30) des weiteren Ablufthauptventils 23 übertragen, wodurch sich dieses Ventil zur weiteren Druckleitung 21 hin öffnet; es ist damit eine impulsartige Entlüftung der unteren Kammer 20 des Zweikammer-Stellantriebs 1 über die Entlüftungsöffnung 33 des weiteren Ablufthauptventils 23 möglich. Das nur Schematisch dargestellte Stellorgan des Stellantriebs 1 ist auf diese Weise impulsartig etwas nach unten bewegt. Das Signal am Ausgang 5 ist beendet, und der Stellantrieb 1 bleibt in der erreichten Lage stehen.

Soll aufgrund eines elektrischen Signals am weiteren Ausgang 7 der Regelelektronik 2 das Stellorgan des Stellantriebs 1 impulsartig nach oben bewegt werden, dann wird das weitere Steuerventil 8 betätigt und sein Ventilorgan 38 für die Zeit des Signals in die in der Figur dargestellte Lage gebracht. Dadurch wird der Innenraum 19 des weiteren Steuerventils 8 entlüftet, woraufhin das Schließorgan des Umschaltventils 24 in seine geöffnete Stellung aufgrund der Wirkung einer Feder 45 zurückfällt und außerdem über die eine Zuleitung 18 als Betätigungseinrichtung für das eine Ablufthauptventil 17 ein Umschaltventil 49 dieses Hauptventils 17 entgegen der Wirkung einer Feder 46 durch den Versorgungsdruck V auf der Druckbeaufschlagungsseite (Membran 41) umgeschaltet wird. Dadurch wird entsprechend dem elektrischen Signal die eine Druckleitung 15 und damit die eine Kammer 16 des Zweikammer-Stellantriebs 1 über die Entlüftungsöffnung 34 im Bereich des einen Ablufthauptventils 17 impulsartig entlüftet. Damit einher geht eine impulsartige Druckbeaufschlagung des Rückschlagventils 25 des weiteren Zulufthauptventils 22, so daß der Versorgungsdruck V impulsartig über einen Eingangsstutzen 47 und das geöffnete Rückschlagventil 25 an der weiteren Kammer 20 des Zweikammer-Stellantriebs 1 liegt. Das weitere Abluftventil 23 weist zu diesem Zeitpunkt die dargestellte Ventilstellung auf, weil das eine Steuerventil 6 entlüftet und damit auch der Innenraum 32 des einen Zulufthauptventils 10 über ein Entlüftungsrohr 48 entlüftet ist.

## Patentansprüche

1. Elektro-pneumatischer Stellungsregler mit einem pneumatisch betätigbaren Zweikammer-Stellantrieb (1) mit
- einem pneumatischen Zuluft- und einem pneumatischen Ablufthauptventil (10; 17) an einer zu einer Kammer (16) des Stellantriebs (1) führenden Druckleitung (15) und mit einem weiteren pneumatischen Zuluft- und einem weiteren pneumatischen Ablufthauptventil (22; 23) an einer weiteren zu einer weiteren Kammer (20) des Stellantriebs (1) führenden Druckleitung (21) und mit
- jeweils einer Betätigungseinrichtung (6, 8, 18, 31) für jedes Hauptventil (10, 17, 22, 23), wobei
- die Betätigungseinrichtung für das eine Zulufthauptventil (10) aus einem auf ein Umschaltventil (11) des einen Zulufthauptventils (10) einwirkenden Steuerventil (6) besteht und die Betätigungseinrichtung für das weitere Zulufthauptventil (22) aus einem auf ein Umschaltventil (24) des weiteren Zulufthauptventils (22) einwirkenden weiteren Steuerventil (8) besteht,
**dadurch gekennzeichnet, daß**
- die Betätigungseinrichtung des einen Ablufthauptventils (17) von einer Zuleitung (18) gebildet ist, die die Druckbeaufschlagungsseite (41) des einen Ablufthauptventils (17) mit dem Innenraum des Umschaltventils (24) des weiteren Zulufthauptventils (22) verbindet, und
- die Betätigungseinrichtung des weiteren Ablufthauptventils (23) von einer weiteren Zuleitung (31) gebildet ist, die von der Druckbeaufschlagungsseite (30) dieses Ablufthauptventils (23) in das Umschaltventil (11) des einen Zulufthauptventils (10) führt.

## Claims

1. Electropneumatic positioner with a pneumatically actuatable two-chamber positioning drive (1) with
- a pneumatic supply air and a pneumatic extracted air main valve (10; 17) on a pressure line (15) leading to a chamber (16) of the positioning drive (1)
and with a further pneumatic supply air and a further pneumatic extracted air main valve (22; 23) on a further pressure line (21) leading to a further chamber (20) of the positioning drive (1) and with
- in each case an actuating device (6, 8, 18, 31) for each main valve (10, 17, 22, 23), wherein
- the actuating device for the one supply air main valve (10) consists of a control valve (6) acting on a reversing valve (11) of the one supply air main valve (10) and the actuating device for the further supply air main valve (22) consists of a further control valve (8) acting on a reversing valve (24) of the further supply air main valve (22),
**characterised in that**
- the actuating device of the one extracted air main valve (17) is formed by a supply line (18) connecting the pressurisation side (41) of the one extracted air main valve (17) to the interior space of the reversing valve (24) of the further supply air main valve (22) and
- the actuating device of the further extracted air main valve (23) is formed by a further supply line (31) leading from the pressurisation side (30) of this extracted air main valve (23) into the reversing valve (11) of the one supply air main valve (10).

## Revendications

1. Positionneur électropneumatique pour un servomoteur (1) à deux chambres à actionnement pneumatique, comportant
- une vanne (10) pneumatique principale d'arrivée d'air et une vanne (17) pneumatique principale d'échappement d'air sur une conduite (15) de pression menant à une chambre (16) du servomoteur (1)
et comportant une autre vanne (22) pneumatique principale d'arrivée d'air et une autre vanne (23) pneumatique principale d'échappement d'air sur une autre conduite (21) de pression menant à une autre chambre (20) du servomoteur (1), et comportant
- un dispositif (6, 8, 18, 31) d'actionnement respectif pour chaque vanne (10, 17, 22, 23) principale,
le dispositif d'actionnement pour la première vanne (10) principale d'arrivée d'air consistant en une vanne (6) pilote agissant sur une vanne (11) d'inversion de la première vanne (10) principale d'arrivée d'air et le dispositif d'actionnement pour l'autre vanne (22) principale d'arrivée d'air consistant en une autre vanne (8) pilote agissant sur une vanne (24) d'inversion de l'autre vanne (22) principale d'arrivée d'air,
**caractérisé en ce que**
- le dispositif d'actionnement de la première vanne (17) principale d'échappement d'air est formé par une conduite (18) d'arrivée qui relie le côté (41) de sollicitation en pression de la première vanne (17) principale d'échappement d'air à l'espace intérieur de la vanne (24) d'inversion de l'autre vanne (22) principale d'arrivée d'air, et
- le dispositif d'actionnement de l'autre vanne (23) principale d'échappement d'air est formé par une autre conduite (31) d'arrivée qui mène depuis le côté (30) de sollicitation en pression de cette vanne (23) principale d'échappement d'air dans la vanne (11) d'inversion de la première vanne (10) principale d'arrivée d'air.
